# EUROPÄISCHE PATENTSCHRIFT

(11) **EP 3 110 658 B1**
(45) Veröffentlichungstag und Bekanntmachung des Hinweises auf die Patenterteilung: **27.09.2017**
(21) Anmeldenummer: 15708147.2
(22) Anmeldetag: 24.02.2015
(51) Int. Cl.: B60N 2/30, B60N 2/12

(54) **KLAPPBARER FAHRZEUGSITZ**
FOLDABLE VEHICLE SEAT
SIÈGE DE VÉHICULE RABATTABLE

(30) Priorität: 25.02.2014 DE 102014203411
(43) Veröffentlichungstag der Anmeldung: 04.01.2017
(73) Patentinhaber: Adient Luxembourg Holding S.à r.l., 2453 Luxembourg (LU)
(72) Erfinder: DUBOIS, Dirk, 66999 Hinterweidenthal (DE); ECKER, Roman, 67705 Trippstadt (DE)
(74) Vertreter: Liedhegener, Ralf
(86) Internationale Anmeldenummer: PCT/EP2015/053807
(87) Internationale Veröffentlichungsnummer: WO 2015/128316

(56) Entgegenhaltungen:
- EP-A1- 1 606 142
- DE-A1- 10 123 776
- DE-A1-102006 007 139
- US-A1- 2006 145 524
- US-A1- 2008 315 654
- US-A1- 2012 056 459

## Beschreibung

Die vorliegende Erfindung betrifft einen Fahrzeugsitz mit einem Sitzteil und einer Rückenlehne, wobei der Fahrzeugsitz aus einer zur Personenbeförderung geeigneten Gebrauchsstellung in eine Ladestellung mit einem abgesenkten Sitzteil und einer in Richtung des Sitzteils geschwenkten Rückenlehne verstellbar ist, wobei das Sitzteil mittels einer Kinematik verstellbar an einer Basis angelenkt ist.

### Stand der Technik

Derartige Fahrzeugsitze sind aus dem Stand der Technik bekannt. In der Gebrauchsstellung kann ein Fahrzeuginsasse auf dem Sitzteil des Fahrzeugsitzes Platz nehmen. In der Ladestellung ist das Sitzkissen weggeschwenkt oder abgesenkt, damit die Rückenlehne im Wesentlichen flach hinter oder auf dem Sitzkissen angeordnet werden kann, so dass die Rückseite der Rückenlehne eine möglichst ebene Ladefläche zur Erweiterung des Laderaums des Fahrzeugs bildet.

Aus der DE 10 2009 037 816 B3 ist ein Fahrzeugsitz bekannt, der aus einer Gebrauchsstellung sowohl in eine Ladestellung als alternativ auch in eine Einstiegsstellung gebracht werden kann, in der die Rückenlehne gegenüber der Gebrauchsstellung nach vorne versetzt hinter einem hochgeschwenkten Sitzkissen angeordnet ist, so dass sich der Einstiegsraum hinter dem Fahrzeugsitz vergrößert. Eine Koppel verbindet die Rückenlehne und das Sitzteil derart miteinander, dass ein Schwenken der Rückenlehne zwangsläufig zu einem Absenken des Sitzteils führt. Bei der konstruktiven Auslegung eines Polsters für einen solchen Fahrzeugsitz muss die Bewegung der Koppel beim Übergang von der Gebrauchsstellung in die Ladestellung berücksichtigt werden, was zu einem erhöhten Polsteraufwand führen kann.

Die US 2006/0145524 A1 offenbart einen Fahrzeugsitz mit einem Sitzteil und einer Rückenlehne, wobei der Fahrzeugsitz aus einer zur Personenbeförderung geeigneten Gebrauchsstellung in eine Ladestellung mit einem abgesenkten Sitzteil und einer in Richtung des Sitzteils geschwenkten Rückenlehne verstellbar ist, wobei das Sitzteil mittels einer Kinematik verstellbar an einer Basis angelenkt ist, wobei ein Kraftspeicher die Kinematik und dadurch das Sitzteil in Richtung der Gebrauchsstellung vorspannt und ein biegeweiches Zugmittel die Kinematik mit der Rückenlehne koppelt.

Aus der DE 10 2006 007 139 A1 ist Fahrzeugsitz bekannt, mit einer Basis, einer mittelbar an der Basis angelenkten vorderen Schwinge, einem an der vorderen Schwinge angelenkten Sitzkissen, einem mit der Basis verbindbaren Fuß, einer am Fuß angelenkten Lehne, und einer Kopplung zwischen dem Sitzkissen und der Lehne, wobei der Fahrzeugsitz von einer zur Personenbeförderung geeigneten Gebrauchsstellung in eine zusammengeklappte Bodenstellung überführbar ist, wobei als Kopplung zwischen dem Sitzkissen und der Lehne eine hintere Schwinge, die mittels eines unteren Gelenks am Fuß und mittels eines oberen Gelenks am Sitzkissen angelenkt ist, und eine Koppel, die an einem Mittelgelenk der hinteren Schwinge und wenigstens mittelbar an der Lehne angelenkt ist, vorgesehen ist.

Die DE 101 23 776 A1 offenbart einen Fahrzeugsitz mit einem Sitzteil und einem auf dieses abklappbaren Rückenlehnenteil, wobei das Sitzteil beim Überführen von einer Gebrauchslage des Sitzes in eine zusammengeklappte Nichtgebrauchslage mittels beidseitig des Sitzteiles angeordneter und in einer Sitzkonsole gelagerter Gestänge nach vorne und unten klappbar ist, wobei das Rückenlehnenteil beim Überführen des Sitzes von dessen Gebrauchslage in dessen Nichtgebrauchslage nach hinten verfahrbar ist.

Aus der US 2008/0315654 A1 ist ein Fahrzeugsitz bekannt, mit einem Sitzteil und einer aus ihrer aufrechten Gebrauchsstellung um eine Drehachse in eine im Wesentlichen waagerechte Ladestellung auf das Sitzteil klappbaren Rückenlehne, wobei im Bereich der Drehachse ein Federmittel auf die Rückenlehne wirkt, welches in Gebrauchsstellung der Rückenlehne ein auf diese in Richtung der Ladestellung wirkendes erstes Drehmoment erzeugt, wobei das mindestens eine Federmittel in Ladestellung der Rückenlehne ein auf diese in Richtung der Gebrauchsstellung wirkendes, dem ersten Drehmoment entgegen gerichtetes zweites Drehmoment erzeugt.

### Aufgabe

Der Erfindung liegt die Aufgabe zu Grunde, einen Fahrzeugsitz der eingangs genannten Art zu verbessern, insbesondere den Polsteraufwand beim Polstern eines solchen Fahrzeugsitzes zu reduzieren und die Gestaltungsmöglichkeiten beim Entwurf eines Polsters zu erhöhen.

### Lösung

Diese Aufgabe wird erfindungsgemäß gelöst durch einen Fahrzeugsitz mit einem Sitzteil und einer Rückenlehne, wobei der Fahrzeugsitz aus einer zur Personenbeförderung geeigneten Gebrauchsstellung in eine Ladestellung mit einem abgesenkten Sitzteil und einer in Richtung des Sitzteils geschwenkten Rückenlehne verstellbar ist, wobei das Sitzteil mittels einer Kinematik verstellbar an einer Basis angelenkt ist und ein Kraftspeicher die Kinematik und dadurch das Sitzteil in Richtung der Ladestellung oder in Richtung der Gebrauchsstellung vorspannt und ein biegeweiches Zugmittel die Kinematik oder das Sitzteil mit der Rückenlehne koppelt. In einer bevorzugten Ausführungsform spannt der Kraftspeicher die Kinematik in Richtung der Ladestellung vor. Es ist jedoch auch eine kinematische Umkehr möglich, bei der der Kraftspeicher die Kinematik in Richtung der Gebrauchsstellung vorspannt.

Dadurch, dass ein Kraftspeicher die Kinematik und dadurch das Sitzteil in Richtung der Ladestellung vorspannt und ein biegeweiches Zugmittel die Kinematik oder das Sitzteil mit der Rückenlehne koppelt, kann auf eine starre Koppel, angelenkt an der Rückenlehne einerseits und der Kinematik oder dem Sitzteil andererseits, verzichtet werden. Das biegeweiche Zugmittel verhindert, dass der Kraftspeicher das Sitzteil in Richtung der Ladestellung bewegt, solange die Rückenlehne nicht nach vorne geschwenkt wird. Bei einem Zurückschwenken des Fahrzeugsitzes aus der Ladestellung in die Gebrauchsstellung muss vom Benutzer des Fahrzeugsitzes nur die Rückenlehne aktiv in Richtung der Gebrauchsstellung zurück geschwenkt werden. Das Zugmittel zieht dabei auch die Kinematik und damit das Sitzteil in die Gebrauchsstellung zurück. Dadurch, dass das Zugmittel biegeweich ist, kann das Zugmittel nahezu beliebig verlegt werden. Eine Ansteuerung der Sitzteilabsenkung kann zur Verfügung gestellt werden, ohne dass Schlitze in Schaumteilen des Sitzpolsters für eine Verbindungskoppel notwendig sind.

Das biegeweiche Zugmittel kann vorteilhaft ein Bowdenzug sein. Das biegeweiche Zugmittel kann auch ein Seilzug, der über eine oder mehrere Umlenkrollen umgelenkt ist, sein. Die Umlenkrollen können beispielsweise an einem Adapter des Fahrzeugsitzes drehbar angelenkt sein.

Der Fahrzeugsitz kann einer oder mehreren Personen Platz bieten. Das Sitzteil ist üblicherweise gepolstert, ebenso die Rückenlehne. In der Gebrauchsstellung ist das Sitzteil im Wesentlichen horizontal und die Rückenlehne im Wesentlichen vertikal angeordnet. Neben der Gebrauchsstellung und der Ladestellung kann der Fahrzeugsitz vorzugsweise und optional in eine Einstiegsstellung gebracht werden. In der Einstiegsstellung werden zumindest Teile des Fahrzeugsitzes so verstellt, dass der Raum hinter der Rückenlehne des Fahrzeugsitzes vergrößert wird, um das Einsteigen von Fahrzeuginsassen, die hinter dem erfindungsgemäßen Fahrzeugsitz Platz nehmen möchten, zu erleichtern. Dabei ist die Rückenlehne in der Einstiegsstellung vorzugsweise gegenüber der Gebrauchsstellung in Richtung des Sitzteils versetzt und das Sitzteil ist in der Einstiegsstellung hochgeschwenkt und besonders bevorzugt im Wesentlichen vertikal angeordnet.

Erfindungsgemäß ist die Rückenlehne beweglich, insbesondere mittels mindestens eines Beschlags, drehbar mit einem Adapter verbunden, der wiederum an einer Basis befestigbar ist. Die Basis kann insbesondere ein Längsversteller oder unmittelbar die Fahrzeugkarosserie sein. Vorzugsweise ist die Lehnenneigung in der Gebrauchsstellung in einem vorbestimmten Winkelbereich (Komfortbereich) einstellbar, um eine angenehme Sitzposition des Fahrzeuginsassen zu ermöglichen.

Vorzugsweise sind eine erste Schwinge, ein erstes Viergelenkselement, ein zweites Viergelenkselement und der Adapter mit einem Längsversteller als Basis verbunden.

Der Längsversteller ist vorzugsweise ein Schienensystem. Besonders bevorzugt umfasst der Längsversteller eine Oberschiene und eine Unterschiene, wobei die Unterschiene fest mit der Fahrzeugkarosserie und die Oberschiene mit dem erfindungsgemäßen Fahrzeugsitz verbunden ist, wobei insbesondere die Oberschiene in Längsrichtung verschiebbar an der Unterschiene gelagert ist und mit dieser verriegelbar ist.

Das Sitzteil ist erfindungsgemäß über die erste Schwinge beweglich, insbesondere drehbar, mit der Oberschiene und über eine zweite Schwinge beweglich, insbesondere drehbar, mit einer dritten Schwinge verbunden, wobei die dritte Schwinge beweglich, insbesondere drehbar, mit der Oberschiene oder dem an der Oberschiene befestigten Adapter verbunden ist. Weiterhin ist erfindungsgemäß der Adapter relativ zu der Oberschiene und/oder zur Fahrzeugkarosserie bewegbar. Dadurch kann der Fahrzeugsitz vorteilhafterweise mit einfachen Mitteln in die Einstiegsstellung verbracht werden. Weiterhin ist in besonders vorteilhafter Weise eine sehr kompakte Bauweise für den erfindungsgemäßen Fahrzeugsitz möglich.

Vorzugsweise weist der Fahrzeugsitz einen Viergelenkmechanismus auf, mit dem der Adapter relativ beweglich zu der Fahrzeugkarosserie und/oder dem Längsversteller gelagert ist. Besonders bevorzugt ist der Adapter mittels zweier Kinematikglieder, insbesondere einem ersten Viergelenkselement und einem zweiten Viergelenkselement, gelagert, die ganz besonders bevorzugt an zwei unterschiedlichen Stellen an dem Adapter, und noch mehr bevorzugt an zwei unterschiedlichen Stellen an dem Längsversteller oder der Fahrzeugkarosserie befestigt sind. Dadurch ist eine sichere und einfache Verstellung der Rückenlehne und des Adapters möglich. Der Adapter ist vorzugsweise mittels eines zweiten Verriegelungsmittels lösbar an der Fahrzeugkarosserie und/oder dem Längsversteller verbunden.

Vorzugsweise weist der Fahrzeugsitz ein erstes Verriegelungsmittel auf, mit dem insbesondere die erste Schwinge relativ zu der Fahrzeugkarosserie bzw. dem Längsversteller verriegelbar ist. Besonders bevorzugt ist das Sitzteil wenigstens in der Gebrauchsstellung und der Ladestellung, ganz besonders bevorzugt auch in der Einstiegsstellung, verriegelbar. Dadurch wird eine unbeabsichtigte Verstellung aus der Gebrauchsstellung, Ladestellung und/oder Einstiegsstellung verhindert.

Vorzugsweise weist der Fahrzeugsitz ein drittes Verriegelungsmittel auf, mit dem die dritte Schwinge relativ zu der Oberschiene und/oder der Fahrzeugkarosserie verriegelbar ist. Dadurch kann eine besonders steife Verriegelung des Sitzteils relativ zu der Oberschiene bzw. der Fahrzeugkarosserie erreicht werden.

Vorzugsweise weist das Entriegelungsmittel ein erstes Ende zur Anbindung an der Rückenlehne und zwei Enden zur Anbindung an dem ersten Verriegelungsmittel und an dem zweiten Verriegelungsmittel auf. Dadurch sind das erste Verriegelungsmittel und das zweite Verriegelungsmittel mit der Rückenlehne gekoppelt, insbesondere derart, dass eine Verstellung der Rückenlehne über einen Grenzwinkel hinaus, vorzugsweise in Richtung des Sitzteils, eine Entriegelung des ersten Verriegelungsmittels und des zweiten Verriegelungsmittels bewirkt. Besonders bevorzugt erfolgt die Kopplung über einen zweiten Bowdenzug.

Vorzugsweise weist der Fahrzeugsitz wenigstens eine Bedieneinheit auf, die direkt oder indirekt mit dem zweiten Verriegelungsmittel gekoppelt ist. Besonders bevorzugt ist die Bedieneinheit an der Rückenlehne angeordnet. Damit ist es vorteilhafterweise möglich, dass ein Fahrzeuginsasse durch die einfach zu erreichende Bedieneinheit eine Verstellung des Fahrzeugsitzes in die Einstiegsstellung bewirken kann. Ganz besonders bevorzugt ist die Bedieneinheit über einen zweiten Bowdenzug mit dem zweiten Verriegelungsmittel gekoppelt. Vorzugsweise ist die Bedieneinheit oder das zweite Verriegelungsmittel derart mit dem ersten Verriegelungsmittel und dem dritten Verriegelungsmittel gekoppelt, dass eine Betätigung der Bedieneinheit auch das erste Verriegelungsmittel und das dritte Verriegelungsmittel öffnet.

Vorzugsweise sind die zweite Schwinge und die dritte Schwinge über eine sechste Drehachse miteinander verbunden. Besonders bevorzugt ist das biegeweiche Zugmittel an einem ersten Anlenkpunkt mit der dritten Schwinge und an einem zweiten Anlenkpunkt mit der Rückenlehne verbunden. Zum Ermöglichen des Komforteinstellbereichs weist das Zugmittel vorteilhaft ein Überhubkompensationselement, beispielsweise eine Feder auf. Dieses Überhubkompensationselement kann auch eingesetzt werden, damit das Sitzteil, begrenzt entkoppelt von der Bewegung der Rückenlehne, in die Ladestellung schwenken kann, bevor die Rückenlehne diese erreicht. Ein Überhubkompensationselement ist beispielsweise aus der DE 199 40 813 A1 bekannt.

Vorzugsweise ist ein Kraftspeicher an der ersten Schwinge angeordnet, insbesondere derart, dass das Sitzteil in Richtung der Ladestellung vorgespannt ist. Besonders bevorzugt ist der Kraftspeicher eine Feder, insbesondere eine Spiralfeder. Ganz besonders bevorzugt ist der Kraftspeicher an der Drehachse zwischen der Oberschiene und der ersten Schwinge angeordnet. Dadurch ist es möglich, dass der Fahrzeugsitz aus der Gebrauchsstellung in die Ladestellung überführt werden kann, ohne dass das biegeweiche Zugmittel Druckkräfte übertragen muss. Dadurch kann das Zugmittel biegeweich ausgeführt sein.

Vorzugsweise wird bei der Verstellung in die Ladestellung die Rückenlehne relativ zu dem Adapter in Richtung des Sitzteils bewegt, insbesondere verschwenkt, wobei bei einer Verschwenkung über einen Grenzwinkel hinaus das erste und das zweite Verriegelungsmittel automatisch entriegelt werden. Besonders bevorzugt wird bei einer weiteren Verstellung über den vorbestimmten Winkel hinaus das Sitzteil automatisch in die Ladestellung abgesenkt.

Vorzugsweise wird bei der Verstellung in die Einstiegsstellung der Adapter und die Rückenlehne relativ zu der Oberschiene in Richtung des Sitzteils bewegt, wobei das Sitzteil automatisch in eine im Wesentlichen vertikale Position verbracht, insbesondere verschwenkt wird.

Vorzugsweise wird die Rückenlehne bei der Verstellung in die Einstiegsstellung relativ zum Adapter verriegelt.

Zusammenfassend läuft ein bevorzugter Bewegungsablauf zwischen der Gebrauchsstellung und der Ladestellung wie folgt ab:
Die Rückenlehne wird aus Gebrauchsstellung so weit nach vorne geklappt, bis ein Grenzwinkel erreicht ist und ein Einsitzen nicht mehr möglich ist. Sobald dieser Grenzwinkel überfahren wird, erfolgt mittels des Entriegelungsmittels, beispielsweise eines zweiten Bowdenzugs, ein Signal bzw. eine Kraft an das erste und dritte Verriegelungsmittel, wodurch das Sitzteil entriegelt wird. Das Sitzteil klappt beim Vorschwenken der Rückenlehne mit Hilfe des Kraftspeichers, insbesondere einer Feder zwischen erster Schwinge und Oberschiene, in eine abgesenkte Position. Die Ansteuerung der dritten Schwinge und damit des Sitzteils über das biegeweiche Zugmittel ist dabei so nachgiebig, dass die dritte Schwinge klappen kann. Die Rückenlehne folgt dem Sitzteil in seine Endlage und man erreicht einen ebenen Ladeboden.

Beim Zurückschwenken des Fahrzeugsitzes von der Ladestellung in die Gebrauchsstellung wird die Rückenlehne aus der Ladestellung in Richtung der Gebrauchsstellung aufgestellt. Dabei wird die dritte Schwinge, mit Hilfe des biegeweichen Zugmittels in seine Ursprungslage gebracht. Die Ansteuerung der ersten und dritten Verriegelungsmittel ist dabei nachgiebig, so dass das Sitzteil in der Gebrauchslage verriegelt. Die Endlage des Sitzteils ist erreicht, bevor ein Einsitzen möglich ist. Mit Hilfe eines Überhubelements in dem biegeweichen Zugmittel kann man anschließend die Rückenlehne in eine Gebrauchsstellung klappen.

Zusammenfassend weist der erfindungsgemäße Fahrzeugsitz folgende Vorteile auf: Es wird keine Ansteuerkoppel zwischen Rückenlehne und Sitzteil benötigt. Diese führt in bekannten Konstruktionen zu Schlitzen im Lehnenpolster und dazu, dass man keine gerade Übertragungsstange zwischen den Beschlägen verwenden kann. Mit einem erfindungsgemäßen Fahrzeugsitz sind extrem kleine Blockmaße realisierbar, das heißt die Rückenlehne ist in der Ladestellung sehr nahe zum Fahrzeugboden angeordnet. Zudem ist eine Einhandbedienung möglich.

### Figuren und Ausführungsformen der Erfindung

Im Folgenden ist die Erfindung anhand eines in den Figuren dargestellten vorteilhaften Ausführungsbeispiels näher erläutert. Die Erfindung ist jedoch nicht auf dieses Ausführungsbeispiel beschränkt. Es zeigen schematisch:
- Fig. 1:: eine Seitenansicht eines erfindungsgemäßen Fahrzeugsitzes in der Gebrauchsstellung,
- Fig. 2:: eine Fig. 1 entsprechende Seitenansicht des Fahrzeugsitzes während des Übergangs von der Gebrauchsstellung in die Ladestellung, wobei die Rückenlehne einen Grenzwinkel erreicht hat, ab dem eine Öffnung von Verriegelungsmitteln erfolgt,
- Fig. 3:: eine Fig. 1 entsprechende Seitenansicht des Fahrzeugsitzes in der Ladestellung und
- Fig. 4:: eine Fig. 1 entsprechende Seitenansicht des Fahrzeugsitzes während des Übergangs von der Ladestellung in die Gebrauchsstellung, wobei die Rückenlehne den Grenzwinkel erreicht hat, ab dem die Verriegelungsmittel wieder verriegeln.

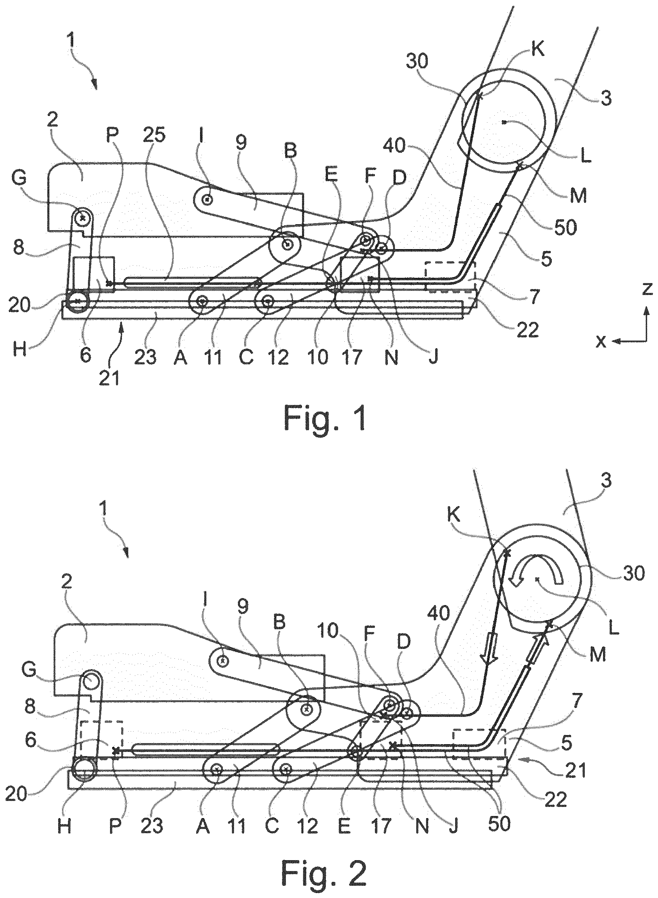

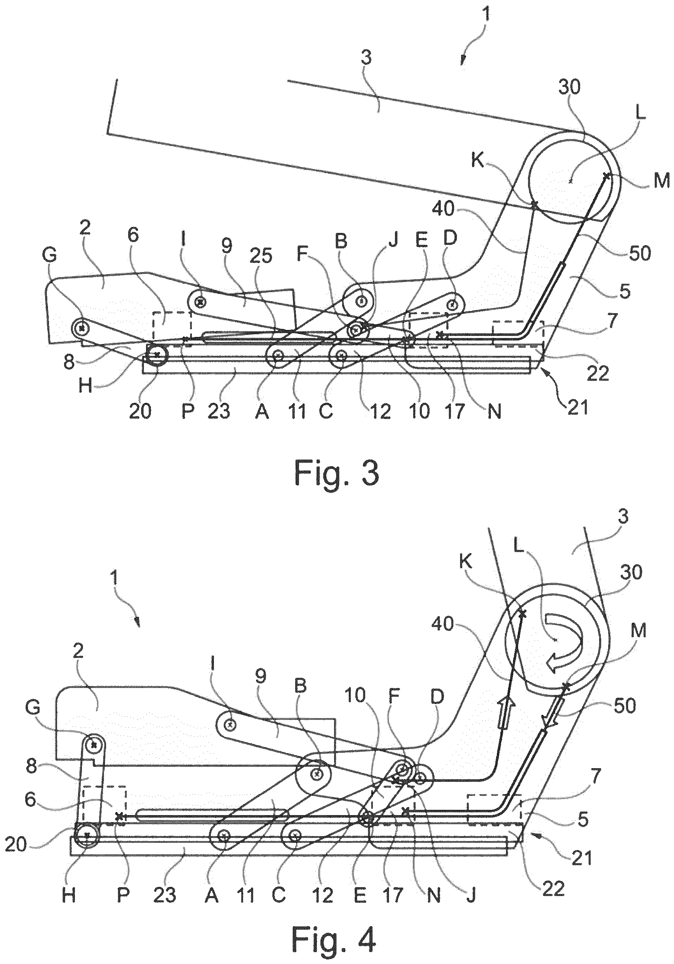

In den Figuren 1 bis 4 ist ein Ausführungsbeispiel eines erfindungsgemäßen Fahrzeugsitzes 1 dargestellt. Der Fahrzeugsitz 1 kann aus einer zum Personentransport geeigneten Gebrauchsstellung (Figur 1) in eine in den Figuren nicht dargestellte Einstiegsstellung und in eine in der Figur 3 dargestellte Ladestellung überführt werden.

Der Fahrzeugsitz 1 wird nachfolgend unter Verwendung von drei senkrecht zueinander verlaufenden Raumrichtungen beschrieben. Eine Längsrichtung x verläuft bei einem im Fahrzeug eingebauten Fahrzeugsitz 1 weitgehend horizontal und vorzugsweise parallel zu einer Fahrzeuglängsrichtung, die der gewöhnlichen Fahrtrichtung des Fahrzeuges entspricht. Eine zu der Längsrichtung x senkrecht verlaufende Querrichtung ist im Fahrzeug ebenfalls horizontal ausgerichtet und verläuft parallel zu einer Fahrzeugquerrichtung. Eine Vertikalrichtung z verläuft senkrecht zu der Längsrichtung x und senkrecht zu der Querrichtung. Bei einem im Fahrzeug eingebauten Fahrzeugsitz 1 verläuft die Vertikalrichtung z parallel zu der Fahrzeughochachse.

Die verwendeten Positions- und Richtungsangaben, wie beispielsweise vorne, hinten, oben und unten beziehen sich auf eine Blickrichtung eines im Fahrzeugsitz 1 sitzenden Insassen in normaler Sitzposition, wobei der Fahrzeugsitz 1 im Fahrzeug eingebaut, in einer zur Personenbeförderung geeigneten Gebrauchsstellung mit aufrecht stehender Rückenlehne 3 und wie üblich in Fahrtrichtung ausgerichtet ist. Der erfindungsgemäße Fahrzeugsitz 1 kann jedoch auch in abweichender Ausrichtung, beispielsweise quer zur Fahrtrichtung verbaut werden.

Der Fahrzeugsitz 1 weist ein Sitzteil 2 auf, wobei das Sitzteil 2 üblicherweise ein Sitzpolster aufweist, das aus Gründen der Übersichtlichkeit in den Figuren nicht dargestellt ist. Weiterhin weist der Fahrzeugsitz 1 eine Rückenlehne 3 auf, wobei die Rückenlehne 3 üblicherweise eine Lehnenpolsterung aufweist, die in den Figuren aus Gründen der Übersichtlichkeit ebenfalls nicht dargestellt ist. Das Sitzteil 2 ist in der dargestellten Gebrauchsstellung im Wesentlichen horizontal angeordnet. Die Rückenlehne 3 ist in der Gebrauchsstellung im Wesentlichen vertikal angeordnet, vorzugsweise gegenüber der Vertikalrichtung z leicht nach hinten geneigt. Die Rückenlehne 3 ist auf beiden Sitzaußenseiten mittels jeweils eines als hinterer Fuß ausgebildeten Adapters 5 und um eine Lehnendrehachse L drehbar gelagert. Der Fahrzeugsitz 1 weist - in Querrichtung betrachtet - auf beiden Sitzseiten einen zwischen der Rückenlehne 3 und dem Adapter 5 wirksam angeordneten Beschlag 30 auf, ausgeführt als Lehnenverstellmechanismus, der in der Gebrauchsstellung eine Komfortverstellung der Rückenlehne 3 in einem vorbestimmten Winkelbereich erlaubt, um den Fahrzeugsitz 1 an die Physiologie eines Fahrzeuginsassen anzupassen.

Das Sitzteil 2 ist über eine nachfolgend näher beschriebene Kinematik mit einer Basis verbunden. Die Basis kann beispielsweise eine Fahrzeugkarosserie sein oder aus einem oder mehreren mit der Fahrzeugkarosserie verbundenen Adapterteilen bestehen. Vorliegend weist der Fahrzeugsitz 1 als Basis einen Längsversteller 21 auf, mit dem der erfindungsgemäße Fahrzeugsitz 1 in Längsrichtung x, also parallel zu der Fahrtrichtung, verstellt werden kann. Der Längsversteller 21 umfasst hierzu auf jeder Sitzaußenseite eine fest mit der Fahrzeugkarosserie verbindbare Unterschiene 23 und eine beweglich auf der Unterschiene 23 gelagerte Oberschiene 22. Die Oberschiene 22 ist mittels einer an sich bekannten Schienenverriegelungsvorrichtung mit der Unterschiene 23 verriegelbar. Zum Betätigen der Schienenverriegelungsvorrichtung ist ein Sitzlängsverstellhebel 25 vorgesehen. Auf beiden Sitzaußenseiten ist jeweils ein Adapter 5 über ein zweites Verriegelungsmittel 7 verriegelbar mit einer der beiden Oberschienen 22 verbunden. An jedem der beiden Adapter 5 ist jeweils ein Beschlag 30 befestigt.

In der Ladestellung ist das Sitzteil 2 gegenüber der Gebrauchsstellung abgesenkt und die Rückenlehne 3 um die Lehnendrehachse L nach vorne auf das Sitzteil 2 geschwenkt. In der Einstiegsstellung ist die Rückenlehne 3 um die Lehnendrehachse L in eine gegenüber der Vertikalrichtung z nach vorne geneigte Stellung vorgeschwenkt, jedoch nicht bis zur einer der Ladestellung entsprechenden Winkellage. Zusätzlich kann bei Erreichen der Einstiegsstellung die Schienenverriegelungsvorrichtung entriegelt werden, so dass der Fahrzeugsitz 1 nach vorne geschoben werden kann.

Der Fahrzeugsitz 1 weist einen weitgehend spiegelsymmetrischen Aufbau zu einer parallel zur Längsrichtung x und parallel zur Vertikalrichtung y verlaufenden Spiegelebene, die in Querrichtung betrachtet durch die Mitte des Fahrzeugsitzes verläuft, auf. Deshalb wird nachfolgend stellenweise nur eine Seite des Fahrzeugsitzes 1 beschrieben.

Der Fahrzeugsitz 1 weist vorliegend einen Viergelenkmechanismus auf, mittels dessen der Adapter 5 an der Oberschiene 22 oder alternativ einem fest mit der Oberschiene 22 verbundenen Bauteil angelenkt ist. Der Viergelenkmechanismus umfasst ein erstes Viergelenkselement 11 und ein zweites Viergelenkselement 12, wobei das erste Viergelenkselement 11 vorliegend eine Schwinge ist, die an einem Ende über ein Drehlager um eine erste Drehachse A drehbar mit der Oberschiene 22 und an dem anderen Ende über ein Drehlager um eine zweite Drehachse B drehbar mit dem Adapter 5 verbunden ist. Entsprechend ist das zweite Viergelenkselement 12 vorliegend eine Schwinge, die an einem Ende über ein Drehlager um eine dritte Drehachse C drehbar mit der Oberschiene 22 und an dem anderen Ende über ein Drehlager um eine vierte Drehachse D drehbar mit dem Adapter 5 verbunden ist. In der Gebrauchsstellung und in der Ladestellung sind das erste Viergelenkselement 11 und das zweite Viergelenkselement 12 im Wesentlichen parallel angeordnet. Zum Übergang zwischen der Gebrauchsstellung und der Einstiegsstellung wird das zweite Verriegelungsmittel 7 geöffnet und durch eine Betätigung des Viergelenkmechanismus der Adapter 5 und die an dem Adapter 5 befestigte Rückenlehne 3 in Fahrtrichtung nach vorne geschwenkt.

Zudem ist das Sitzteil 2 mittels einer Kinematik an der Oberschiene 22 angelenkt. Dazu ist über ein Drehlager eine dritte Schwinge 10 um eine fünfte Drehachse E drehbar mit der Oberschiene 22 oder alternativ mit dem Adapter 5 verbunden. Diese dritte Schwinge 10 ist an ihrem von der fünften Drehachse E entfernten Ende um eine sechste Drehachse F drehbar mit einer zweiten Schwinge 9 verbunden. Die zweite Schwinge 9 weist eine gestreckte Form auf und ist wiederum an ihrem von der sechsten Drehachse F entfernten Ende um eine neunte Drehachse I drehbar mit dem Sitzteil 2 verbunden.

An seinem vorderen, d.h. insbesondere an dem von der Rückenlehne 3 in der Gebrauchsstellung entfernten Ende, ist das Sitzteil 2 über ein Drehlager um eine siebte Drehachse G drehbar mit einer ersten Schwinge 8 verbunden. Diese ist vorliegend in der Gebrauchsstellung im Wesentlichen vertikal angeordnet und an ihrem von der siebten Drehachse G entfernten Ende über ein Drehlager um eine achte Drehachse H drehbar mit der Oberschiene 22 verbunden oder alternativ mit einem mit der Oberschiene 22 verbundenen, in den Figuren nicht dargestellten, vorderen Fuß verbunden. Die erste Schwinge 8, die zweite Schwinge 9, die dritte Schwinge 10, sowie die Drehachsen E, F, G, H, I bilden die Kinematik (8, 9, 10, E, F, G, H, I) zur Anlenkung des Sitzteils 2 an der Basis, vorliegend an der Oberschiene 22. Die Kinematik (8, 9, 10, E, F, G, H, I) ist eine Fünfgelenkkinematik.

Ein erstes Verriegelungsmittel 6 ist im Bereich der ersten Schwinge 8 fest mit der Oberschiene 22 verbunden. Mit dem ersten Verriegelungsmittel 6 ist die ersten Schwinge 8 relativ zu der Oberschiene 22 in ihrer Winkellage verriegelbar. Dadurch ist die Kinematik (8, 9, 10, E, F, G, H, I) und somit das Sitzteil 2 in der Gebrauchsstellung verriegelbar.

Der Fahrzeugsitz 1 weist vorzugsweise an der achten Drehachse H einen Kraftspeicher 20 auf, hier eine Feder, die die Kinematik (8, 9, 10, E, F, G, H, I) und mit dieser das Sitzteil 2 in Richtung der Ladestellung vorspannt.

Gemäß des dargestellten Ausführungsbeispiels weist der Fahrzeugsitz 1 zudem ein biegeweiches Zugmittel 40, vorliegend einen Bowdenzug 40, auf. Der Bowdenzug 40 hat zwei Enden. Ein erstes der beiden Enden des Bowdenzugs 40 ist über einen ersten Anlenkpunkt J mit der dritten Schwinge 10 verbunden. Der erste Anlenkpunkt J ist exzentrisch zur fünften Drehachse E angeordnet. Ein zweites der beiden Enden ist über zweiten Anlenkpunkt K mit der Rückenlehne 3 verbunden. Der zweiten Anlenkpunkt K ist exzentrisch zur Lehnendrehachse L angeordnet.

In der Gebrauchsstellung ist der Fahrzeugsitz 1 durch das erste Verriegelungsmittel 6, das zweite Verriegelungsmittel 7, das dritte Verriegelungsmittel 17 und insbesondere bei verriegeltem Längsversteller 21, relativ zu der Fahrzeugkarosserie fixiert.

Zur Verstellung in die in den Figuren nicht dargestellte Einstiegsstellung wird beispielsweise eine nicht dargestellte Bedieneinheit betätigt, die über einen ebenfalls nicht dargestellten zweiten Bowdenzugs mit dem zweiten Verriegelungsmittel 7 gekoppelt ist und dieses entriegelt. Vorzugsweise werden dadurch auch das erste Verriegelungsmittel 6 und ein zwischen der Oberschiene 22 und der dritten Schwinge 10 wirksames drittes Verriegelungsmittel 17 geöffnet. Dann wird die Rückenlehne 3 mit dem Adapter 5 über den Viergelenkmechanismus (erste Drehachse A, zweite Drehachse B, dritte Drehachse C, vierte Drehachse D) in Längsrichtung x, also in Richtung auf das Sitzteil 2 zu verschwenkt. Durch die Verbindung zwischen dem Sitzteil 2 und dem Adapter 5 mittels der zweiten Schwinge 9 und der dritten Schwinge 10 wird die Verschwenkung der Rückenlehne 3 und des Adapters 5 gleichzeitig das Sitzteil 2 in eine im Wesentlichen vertikale Position verbracht. Wenn die Einstiegsstellung erreicht ist, wird das Sitzteil 2 vorzugsweise automatisch oder manuell mit dem zweiten Verriegelungsmittel 7 verriegelt, so dass keine unbeabsichtigte Verstellung erfolgen kann.

Zur Rückstellung aus der Einstiegsstellung in die Gebrauchsstellung wird vorzugsweise die Rückenlehne 3 in Richtung der Gebrauchsstellung bewegt, wodurch auf Grund der oben beschriebenen Kopplung der Adapter 5 und das Sitzteil 2 automatisch ebenfalls in die Gebrauchsstellung verbracht werden.

In Figur 3 ist der Fahrzeugsitz 1 in der Ladestellung dargestellt. Dabei sei allgemein auf die Ausführungen bezüglich Figur 1 verwiesen. Zur Verstellung des Fahrzeugsitzes 1 aus der Gebrauchsstellung in die Ladestellung wird die Rückenlehne 3 in eine im Wesentlichen horizontale Position verfahren, d.h. bei geöffneten Beschlägen 30 um die Lehnendrehachse L relativ zu dem mit der Oberschiene 22 verriegelten Adapter 5 gedreht. Die Rückenlehne 3 ist derart mittels eines Entriegelungsmittels 50, beispielsweise eines dritten Bowdenzugs, mit dem ersten Verriegelungsmittel 6 und dem dritten Verriegelungsmittel 17 gekoppelt, dass ab einer Verstellung um einen vorbestimmten Winkel, bei der die Rückenlehne 3 einen Grenzwinkel erreicht, das erste Verriegelungsmittel 6 und das dritten Verriegelungsmittel 17 öffnen, so dass die das Sitzteil 2 tragenden Kinematikbauteile 8, 9, 10 der Kinematik 8, 9, 10, E, F, G, H, I nicht mehr mit der Basis, hier der Oberschiene 22, verriegelt sind. Die Position des Sitzteils 2 ist nun ausschließlich von der Betätigung des an der Rückenlehne 3 angelenkten biegeweichen Zugmittels 40 abhängig. Ein erstes Ende des Entriegelungsmittels 50 ist in einem ersten Anbindungspunkt M mit der Rückenlehne 3 verbunden. Das Entriegelungsmittel 50 ist derart gestaltet, dass es zwei dem ersten Ende gegenüberliegende zweite Enden aufweist. Eines der zweiten Enden ist in einem zweiten Anbindungspunkt N mit dem dritten Verriegelungsmittel 17 verbunden. Das andere zweite Ende des Entriegelungsmittels 50 ist in einem dritten Anbindungspunkt P mit dem ersten Verriegelungsmittel 6 verbunden.

Der Grenzwinkel ist vorzugsweise derart gewählt, dass bei einer Neigung der Rückenlehne 3 entsprechend dem Grenzwinkel ein Fahrzeuginsasse nicht mehr in dem Fahrzeugsitz 1 sitzen kann. Dadurch wird sichergestellt, dass keine Gefährdung eines Fahrzeuginsassen durch unbeabsichtigtes Lösen der Verriegelung des Sitzteils 2 auftritt. Ein Komforteinstellbereich der Rückenlehne 3 in der Gebrauchsstellung lässt sich erreichen, indem in dem ersten Anbindungspunkt M und/oder in dem zweiten Anbindungspunkt N und dem dritten Anbindungspunkt P eine begrenzte Bewegung zwischen dem Entriegelungsmittel 50 und der Lehne 3 bzw. und den ersten und zweiten Verriegelungsmitteln 6, 7 vorgesehen ist. Dies kann beispielsweise durch Einhängen eines Bowdenzugendes des Entriegelungsmittels 50 in ein Langloch des ersten Anbindungspunkts M oder des zweiten und dritten Anbindungspunkts K erfolgen.

Beim Übergang von der Gebrauchsstellung in die Ladestellung bleibt der Adapter 5 mittels des zweiten Verriegelungsmittels 7 relativ zu der Oberschiene 22 fixiert. Die Kopplung des biegeweichen Zugmittels 40 mit der Rückenlehne 3 und der dritten Schwinge 10 führt aufgrund des als Feder ausgebildeten Kraftspeichers 20 bei einer Neigungsverstellung der Rückenlehne 3 über den Grenzwinkel hinaus zu einer Bewegung der dritten Schwinge 10 und somit der zweiten Schwinge 9, die wiederum eine Absenkung des Sitzteils 2 in die Ladestellung bewirkt. Dabei dreht sich die erste Schwinge 8 um die siebte Drehachse G und die achte Drehachse H. Optional wird das erste Verriegelungsmittel 6 in der Ladestellung automatisch oder manuell betätigt und verriegelt somit das Sitzteil 2 in der Ladestellung.

Zur Rückstellung von der Ladestellung in die Gebrauchsstellung braucht lediglich die Rückenlehne 3 aufgerichtet, also in ihre ursprüngliche Neigungseinstellung zurückgeschwenkt werden. Durch die Kopplung der Rückenlehne 3 mit der dritten Schwinge 10 mittels des biegeweichen Zugmittels 40 wird das Sitzteil 2 automatisch und unter Vorspannung des Kraftspeichers 20 ebenfalls wieder in die gegenüber der Ladestellung angehobene Stellung zurückbewegt. Sobald die Rückenlehne 3 wieder den Grenzwinkel erreicht hat, hat das Sitzteil 2 bereits wieder die Gebrauchsstellung erreicht und das erste Verriegelungsmittel 6 und das dritte Verriegelungsmittel 17 verriegeln wieder.

Die in der vorstehenden Beschreibung, den Ansprüchen und den Zeichnungen offenbarten Merkmale können sowohl einzeln als auch in Kombination für die Verwirklichung der Erfindung in ihren verschiedenen Ausgestaltungen von Bedeutung sein.

### Bezugszeichenliste

- 1: Fahrzeugsitz
- 2: Sitzteil
- 3: Rückenlehne
- 5: Adapter, hinterer Fuß
- 6: erstes Verriegelungsmittel
- 7: zweites Verriegelungsmittel
- 8: erste Schwinge
- 9: zweite Schwinge
- 10: dritte Schwinge
- 11: erstes Viergelenkselement
- 12: zweites Viergelenkselement
- 17: drittes Verriegelungsmittel
- 20: Kraftspeicher, Feder
- 21: Längsversteller
- 22: Oberschiene
- 23: Unterschiene
- 25: Sitzlängsverstellhebel
- 30: Beschlag
- 40: biegeweiches Zugmittel, Bowdenzug
- 50: Entriegelungsmittel
- A: erste Drehachse
- B: zweite Drehachse
- C: dritte Drehachse
- D: vierte Drehachse
- E: fünfte Drehachse
- F: sechste Drehachse
- G: siebte Drehachse
- H: achte Drehachse
- I: neunte Drehachse
- J: erster Anlenkpunkt (des biegeweichen Zugmittels 40)
- K: zweiter Anlenkpunkt (des biegeweichen Zugmittels 40)
- L: Lehnendrehachse
- M: erster Anbindungspunkt (des Entriegelungsmittels 50)
- N: zweiter Anbindungspunkt (des Entriegelungsmittels 50)
- P: dritter Anbindungspunkt (des Entriegelungsmittels 50)
- x: Längsrichtung
- z: Vertikalrichtung

## Patentansprüche

1. Fahrzeugsitz (1) mit einem Sitzteil (2) und einer Rückenlehne (3), wobei der Fahrzeugsitz (1) aus einer zur Personenbeförderung geeigneten Gebrauchsstellung in eine Ladestellung mit einem abgesenkten Sitzteil (2) und einer in Richtung des Sitzteils (2) geschwenkten Rückenlehne (3) verstellbar ist, wobei das Sitzteil (2) mittels einer Kinematik (8, 9, 10, E, F, G, H, I) verstellbar an einer Basis (21) angelenkt ist,
und ein Kraftspeicher (20) die Kinematik (8, 9, 10, E, F, G, H, I) und dadurch das Sitzteil (2) in Richtung der Ladestellung oder in Richtung der Gebrauchsstellung vorspannt, und ein biegeweiches Zugmittel (40) die Kinematik (8, 9, 10, E, F, G, H, I) oder das Sitzteil (2) mit der Rückenlehne (3) koppelt, wobei die Kinematik (8, 9, 10, E, F, G, H, I) eine erste Schwinge (8) aufweist, und ein vorderer Bereich des Sitzteils (2) mittels der ersten Schwinge (8) an der Basis (21) angelenkt ist,
**dadurch gekennzeichnet, dass**
die Kinematik (8, 9, 10, E, F, G, H, I) eine zweite Schwinge (9) und eine dritte Schwinge (10) aufweist, und ein hinterer Bereich des Sitzteils (2) mittels der zweiten Schwinge (9) und der dritten Schwinge (10) an der Basis (21) angelenkt ist, wobei die dritte Schwinge (10) um eine Drehachse (E) drehbar mit der Basis (21) oder einem mit der Basis (21) verbindbaren Adapter (5) verbunden ist, und die dritte Schwinge (10) um eine weitere Drehachse (F) drehbar mit der zweiten Schwinge (9) verbunden ist, und die zweite Schwinge (9) um eine weitere Drehachse (I) drehbar mit dem Sitzteil (2) verbunden ist.

2. Fahrzeugsitz (1) nach Anspruch 1, **dadurch gekennzeichnet, dass** die Basis ein Längsversteller (21) ist, der insbesondere eine Oberschiene (22) und eine Unterschiene (23) aufweist.

3. Fahrzeugsitz (1) nach Anspruch 2, **dadurch gekennzeichnet, dass** die Unterschiene (23) fest mit einer Fahrzeugkarosserie verbindbar ist und die Kinematik (8, 9, 10, E, F, G, H, I) an der Oberschiene (22) angelenkt ist.

4. Fahrzeugsitz (1) nach einem der Ansprüche 1 bis 3, **dadurch gekennzeichnet, dass** das biegeweiche Zugmittel ein Bowdenzug (40) oder ein Seilzug ist.

5. Fahrzeugsitz (1) nach einem der Ansprüche 1 bis 4, **dadurch gekennzeichnet, dass** das biegeweiche Zugmittel (40) über eine oder mehrere Umlenkrollen umgelenkt ist.

6. Fahrzeugsitz (1) nach einem der Ansprüche 1 bis 5, **dadurch gekennzeichnet, dass** das biegeweiche Zugmittel (40) einerseits an der dritten Schwinge (10) und andererseits an der Rückenlehne (3) angelenkt ist.

7. Fahrzeugsitz (1) nach einem der Ansprüche 1 bis 6, **dadurch gekennzeichnet, dass** die Kinematik (8, 9, 10, E, F, G, H, I) mittels wenigstens eines Verriegelungsmittels (6, 17) in der Gebrauchsstellung verriegelbar ist.

8. Fahrzeugsitz (1) nach Anspruch 7, **dadurch gekennzeichnet, dass** das wenigstens eine Verriegelungsmittel (6, 17) mittels eines Entriegelungsmittels (50) derart mit der Rückenlehne (3) gekoppelt ist, dass ein Vorschwenken der Rückenlehne (3) das wenigstens eine Verriegelungsmittel (6, 17) entriegelt.

9. Fahrzeugsitz (1) nach Anspruch 8, **dadurch gekennzeichnet, dass** bei einem Vorschwenken der Rückenlehne (3) aus der Gebrauchsstellung in Richtung der Ladestellung erst nach Erreichen eines definierten Grenzwinkels der Rückenlehne (3) das wenigstens eine Verriegelungsmittel (6, 17) entriegelt.

10. Fahrzeugsitz (1) nach Anspruch 9, **dadurch gekennzeichnet, dass** bei einem Zurückschwenken der Rückenlehne (3) aus der Ladestellung in Richtung der Gebrauchsstellung beim Erreichen des Grenzwinkels der Rückenlehne (3) das wenigstens eine Verriegelungsmittel (6, 17) die Kinematik (8, 9, 10, E, F, G, H, I) verriegelt.

11. Fahrzeugsitz (1) nach einem der Ansprüche 1 bis 10, **dadurch gekennzeichnet, dass** das biegeweiche Zugmittel (40) ein Überhubkompensationselement aufweist.

12. Fahrzeugsitz (1) nach einem der Ansprüche 1 bis 11, **dadurch gekennzeichnet, dass** der Fahrzeugsitz (1) in eine Einstiegsstellung überführt werden kann, in der die Rückenlehne (3) gegenüber der Gebrauchsstellung nach vorne versetzt hinter einem hochgeschwenkten Sitzteil (2) angeordnet ist.

## Claims

1. Vehicle seat (1) having a seat part (2) and a backrest (3), wherein the vehicle seat (1) can be adjusted from a use position, suitable for conveying a person, to a loading position with a lowered seat part (2) and a backrest (3) that is pivoted towards the seat part (2), wherein the seat part (2) is articulated in an adjustable manner to a base (21) by means of a linkage (8, 9, 10, E, F, G, H, I),
and a force accumulator (20) preloads the linkage (8, 9, 10, E, F, G, H, I) and therefore the seat part (2) towards the loading position or towards the use position, and a flexurally weak tension means (40) couples the linkage (8, 9, 10, E, F, G, H, I) or the seat part (2) to the backrest (3), wherein the linkage (8, 9, 10, E, F, G, H, I) has a first link (8), and a front region of the seat part (2) is articulated to the base (21) by means of the first link (8),
**characterized in that**
the linkage (8, 9, 10, E, F, G, H, I) has a second link (9) and a third link (10), and a rear region of the seat part (2) is articulated to the base (21) by means of the second link (9) and the third link (10), wherein the third link (10) is connected to the base (21), or to an adapter (5) that can be connected to the base (21), such that it is able to rotate about an axis of rotation (E), and the third link (10) is connected to the second link (9) such that it is able to rotate about another axis of rotation (F), and the second link (9) is connected to the seat part (2) such that it is able to rotate about another axis of rotation (I).

2. Vehicle seat (1) according to Claim 1, **characterized in that** the base is a longitudinal adjuster (21) which in particular has an upper rail (22) and a lower rail (23).

3. Vehicle seat (1) according to Claim 2, **characterized in that** the lower rail (23) can be securely connected to a vehicle body, and the linkage (8, 9, 10, E, F, G, H, I) is articulated to the upper rail (22).

4. Vehicle seat (1) according to one of Claims 1 to 3, **characterized in that** the flexurally weak tension means is a Bowden cable (40) or a pulley.

5. Vehicle seat (1) according to one of Claims 1 to 4, **characterized in that** the flexurally weak tension means (40) is redirected by means of one or more sheaves.

6. Vehicle seat (1) according to one of Claims 1 to 5, **characterized in that** the flexurally weak tension means (40) is articulated on one hand to the third link (10) and on the other hand to the backrest (3).

7. Vehicle seat (1) according to one of Claims 1 to 6, **characterized in that** the linkage (8, 9, 10, E, F, G, H, I) can be locked in the use position by means of at least one locking means (6, 17).

8. Vehicle seat (1) according to Claim 7, **characterized in that** the at least one locking means (6, 17) is coupled to the backrest (3) by means of an unlocking means (50) such that forward pivoting of the backrest (3) unlocks the at least one locking means (6, 17).

9. Vehicle seat (1) according to Claim 8, **characterized in that**, in the event of forward pivoting of the backrest (3) from the use position towards the loading position, the at least one locking means (6, 17) unlocks only after reaching a defined limit angle of the backrest (3).

10. Vehicle seat (1) according to Claim 9, **characterized in that**, in the event of backward pivoting of the backrest (3) from the loading position towards the use position, the at least one locking means (6, 17) locks the linkage (8, 9, 10, E, F, G, H, I) upon reaching the limit angle of the backrest (3).

11. Vehicle seat (1) according to one of Claims 1 to 10, **characterized in that** the flexurally weak tension means (40) has an over-travel compensation element.

12. Vehicle seat (1) according to one of Claims 1 to 11, **characterized in that** the vehicle seat (1) can be converted into an entry position in which, compared to the use position, the backrest (3) is displaced forward behind a pivoted-up seat part (2).

## Revendications

1. Siège de véhicule (1) avec une partie d'assise (2) et un dossier (3), dans lequel le siège de véhicule (1) peut être déplacé d'une position d'utilisation convenant pour le transport d'une personne à une position de chargement avec une partie d'assise (2) abaissée et un dossier (3) rabattu en direction de la partie d'assise (2), dans lequel la partie d'assise (2) est articulée à une base (21) de façon déplaçable au moyen d'un mécanisme (8, 9, 10, E, F, G, H, I) et un accumulateur de force (20) précontraint le mécanisme (8, 9, 10, E, F, G, H, I) et dès lors la partie d'assise (2) en direction de la position de chargement ou en direction de la position d'utilisation, et un moyen de traction flexible (40) couple le mécanisme (8, 9, 10, E, F, G, H, I) ou la partie d'assise (2) au dossier (3), dans lequel le mécanisme (8, 9, 10, E, F, G, H, I) présente une première bielle oscillante (8), et une région antérieure de la partie d'assise (2) est articulée à la base (21) au moyen de la première bielle oscillante (8),
**caractérisé en ce que** le mécanisme (8, 9, 10, E, F, G, H, I) présente une deuxième bielle oscillante (9) et une troisième bielle oscillante (10), et une région postérieure de la partie d'assise (2) est articulée à la base (21) au moyen de la deuxième bielle oscillante (9) et de la troisième bielle oscillante (10), dans lequel la troisième bielle oscillante (10) est reliée de façon rotative autour d'un axe de rotation (E) à la base (21) ou à un adaptateur (5) pouvant être relié à la base (21), et la troisième bielle oscillante (10) est reliée à la deuxième bielle oscillante (9) de façon rotative autour d'un autre axe de rotation (F), et la deuxième bielle oscillante (9) est reliée à la partie d'assise (2) de façon rotative autour d'un autre axe de rotation (I).

2. Siège de véhicule (1) selon la revendication 1, **caractérisé en ce que** la base est un chemin longitudinal (21), qui présente en particulier un rail supérieur (22) et un rail inférieur (23).

3. Siège de véhicule (1) selon la revendication 2, **caractérisé en ce que** le rail inférieur (23) peut être assemblé de façon fixe à la carrosserie du véhicule et le mécanisme (8, 9, 10, E, F, G, H, I) est articulé au rail supérieur (22).

4. Siège de véhicule (1) selon l'une quelconque des revendications 1 à 3, **caractérisé en ce que** le moyen de traction flexible est un câble Bowden (40) ou un tirant à câble.

5. Siège de véhicule (1) selon l'une quelconque des revendications 1 à 4, **caractérisé en ce que** le moyen de traction flexible (40) est dévié par une ou plusieurs poulie(s) de renvoi.

6. Siège de véhicule (1) selon l'une quelconque des revendications 1 à 5, **caractérisé en ce que** le moyen de traction flexible (40) est articulé d'une part à la troisième bielle oscillante (10) et d'autre part au dossier (3).

7. Siège de véhicule (1) selon l'une quelconque des revendications 1 à 6, **caractérisé en ce que** le mécanisme (8, 9, 10, E, F, G, H, I) peut être verrouillé dans la position d'utilisation au moyen d'au moins un moyen de verrouillage (6, 17).

8. Siège de véhicule (1) selon la revendication 7, **caractérisé en ce que** ledit au moins un moyen de verrouillage (6, 17) est couplé au dossier (3) au moyen d'un moyen de déverrouillage (50), de telle manière qu'un basculement vers l'avant du dossier (3) déverrouille ledit au moins un moyen de verrouillage (6, 17).

9. Siège de véhicule (1) selon la revendication 8, **caractérisé en ce que** lors d'un basculement vers l'avant du dossier (3) de la position d'utilisation en direction de la position de chargement ledit au moins un moyen de verrouillage (6, 17) n'est déverrouillé qu'après que le dossier (3) ait atteint un angle limite défini.

10. Siège de véhicule (1) selon la revendication 9, **caractérisé en ce que** lors d'un relèvement du dossier (3) de la position de chargement en direction de la position d'utilisation ledit au moins un moyen de verrouillage (6, 17) verrouille le mécanisme (8, 9, 10, E, F, G, H, I) après que le dossier (3) ait atteint l'angle limite.

11. Siège de véhicule (1) selon l'une quelconque des revendications 1 à 10, **caractérisé en ce que** le moyen de traction flexible (40) présente un élément de compensation d'excédent de levée.

12. Siège de véhicule (1) selon l'une quelconque des revendications 1 à 11, **caractérisé en ce que** le siège de véhicule (1) peut être amené dans une position d'embarquement, dans laquelle le dossier (3) est disposé en décalage vers l'avant par rapport à la position d'utilisation derrière une partie d'assise relevée (2).
